# FASCICULE DE BREVET EUROPEEN

(11) **EP 0 587 460 B1**
(45) Date de publication et mention de la délivrance du brevet: **28.08.1996**
(21) Numéro de dépôt: 93401483.8
(22) Date de dépôt: 10.06.1993
(51) Int. Cl.: G21C 19/07, G21C 3/04, G21F 9/34, G21F 3/04

(54) **Panier formant support des éléments d'une barrière ouvragée et pince de manutention de ce panier**
Halterungskorb für Elemente einer bearbeiteten Barriere und Greifer zum Hantieren dieses Korbes
Support basket for locating elements of a worked barrier and grab for handling the basket

(30) Priorité: 12.06.1992 FR 9207090
(43) Date de publication de la demande: 16.03.1994
(73) Titulaire: COMMISSARIAT A L'ENERGIE ATOMIQUE, 75015 Paris (FR)
(72) Inventeur: Lajudie, Alain, F-75011 Paris (FR)
(74) Mandataire: Dubois-Chabert, Guy

(56) Documents cités:
- EP-A- 0 328 285
- DE-A- 2 264 384
- DE-A- 3 038 592
- DE-A- 3 517 930
- US-A- 4 410 802

## Description

La présente invention concerne un panier formant support des éléments d'une barrière ouvragée, ainsi qu'une pince permettant la manutention de ces paniers.

Au cours de l'exploitation de l'énergie nucléaire, on obtient des matériaux combustibles irradiés qu'il est nécessaire de stocker dans un confinement adapté après qu'ils aient ou non été retraités. Le retraitement consiste à séparer les produits qui peuvent être réutilisés, des produits qui doivent être considérés comme des déchets. Ces déchets de très haute activité sont généralement mis sous forme de verres borosilicatés par une vitrification adaptée. Ce procédé permet de réduire, de façon très importante, les volumes à stocker. Ces déchets ainsi traités sont alors placés dans des conteneurs, généralement métalliques, qui sont ensuite stockés en couches géologiques profondes.

En effet, ces déchets, même après le retraitement, contiennent toujours des émetteurs alpha, béta et gamma, ce qui explique qu'ils doivent être stockés en profondeur dans le sol, dans des formations géologiques adaptées, par exemple : massif granitique, dôme de sel ou formation argileuse. La rétention des radio-nucléides est assurée d'une part, par les parois du conteneur et d'autre part, par le site géologique dans lequel est réalisée l'implantation de ces déchets.

Le stockage des conteneurs est généralement réalisé dans des puits ou des galeries. Lors de ce stockage, il est nécessaire d'isoler ces conteneurs des parois du puits ou de la galerie de stockage, par des matériaux imperméables de grande pérennité. Les argiles conviennent bien à cet emploi mais leur mise en place peut être délicate. En effet, une densité élevée est requise pour permettre d'obtenir l'étanchéité recherchée.

Des études ont été effectuées pour disposer des argiles tassées autour de conteneurs de déchets disposés dans des puits verticaux. Le résultat des essais montre que cette technique ne permet d'obtenir que des densités assez faibles.

En conséquence, on a fabriqué des pièces ou briques en argile compactée, de densité très élevée et on les a disposées autour des conteneurs de déchets et contre les parois du puits, de façon à former à l'intérieur de celui-ci une cheminée verticale. Cette cheminée de briques d'argile extrêmement dense et étanche est dénommée "barrière ouvragée". Cette technique est intéressante car elle permet d'isoler correctement les déchets du milieu extérieur, toutefois, la manutention et la mise en place des briques en argile compactée est délicate.

En conséquence, l'invention a pour objet de remédier à ces inconvénients.

A cet effet, l'invention concerne un panier formant support des éléments d'une barrière ouvragée.

Selon les caractéristiques de l'invention, ce panier comprend une virole cylindrique dont l'une des extrémités est munie d'une embase annulaire s'étendant radialement vers l'extérieur sensiblement perpendiculairement à l'axe longitudinal de ladite virole, cette embase supportant lesdits éléments de barrière ouvragée et présentant des moyens de positionnement de ces éléments, ce panier comprenant en outre des moyens permettant de gerber les paniers les uns sur les autres.

Ce panier permet d'assembler en surface, plusieurs couches des éléments formant la barrière ouvragée, par exemple une dizaine de couches, puis de les déplacer en une seule manipulation. La virole centrale du panier assure le tubage du puits de façon que lors de la mise en place des conteneurs contenant les déchets radioactifs, il ne puisse y avoir de contacts entre ces conteneurs et la barrière ouvragée. On évite ainsi que la masse d'un conteneur écrase ladite barrière argileuse et bloque la descente des conteneurs suivants. Enfin, la superposition des paniers portant les éléments de la barrière ouvragée permet de constituer une barrière continue sur toute la hauteur du puits.

De façon avantageuse, la virole est munie de perforations sur au moins une partie de sa surface. Ces perforations permettent la circulation d'eau en direction des éléments d'argile de la barrière ouvragée de façon que ceux-ci gonflent et assurent finalement le colmatage du puits.

De façon également avantageuse, les moyens de positionnement sont constitués par une nervure annulaire prévue sur la face de l'embase destinée à recevoir les éléments de barrière ouvragée, cette nervure coopérant avec une gorge prévue à cet effet sur lesdits éléments.

Ces moyens de positionnement permettent d'éviter, lors de la manipulation du panier, que les éléments qui sont simplement posés à la surface de son embase, ne tombent.

L'invention concerne également une pince de manutention du panier précédemment décrit. Selon les caractéristiques de l'invention, cette pince comprend un corps cylindrique formant organe de centrage, d'un diamètre inférieur à celui de la virole dudit panier, un moyen de levage fixé sur ledit corps et au moins deux organes rétractables faisant saillie de la surface latérale dudit corps, le mouvement de ces organes étant assuré par des moyens moteurs.

Cette pince permet de manipuler les paniers depuis la surface et de les descendre au fond du puits y compris dans des puits de petit diamètre et de grande profondeur excluant la présence d'un homme.

La présente invention sera mieux comprise à la lecture de la description suivante d'un mode de réalisation de l'invention donné à titre d'exemple illustratif et non limitatif, cette description étant faite en faisant référence aux dessins joints, dans lesquels :
- les figures 1 à 3 illustrent différents modes de réalisation des paniers selon l'invention, vus en coupe,
- la figure 4 est un schéma illustrant en coupe, les paniers superposés et placés à l'intérieur d'un puits de stockage,
- la figure 5 est une vue en perspective d'un premier mode de réalisation d'une pince de manutention selon l'invention,
- la figure 6 est une vue de côté d'un second mode de réalisation d'une pince de manutention de l'invention, et
- la figure 7 est une vue en coupe selon la ligne VII-VII de la figure 6.

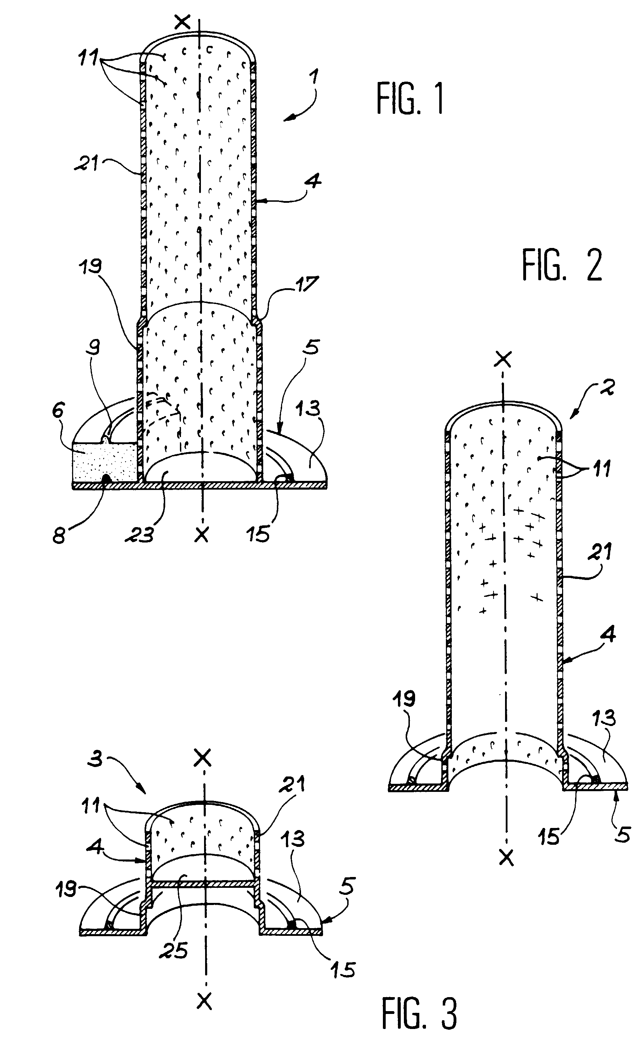

La mise en place des éléments de la barrière ouvragée dans un puits de stockage, est effectuée à l'aide de paniers qui peuvent être réalisés selon trois modes. Ces trois modes de réalisation sont illustrés sur les figures 1, 2 et 3 et correspondent respectivement à un panier dit "panier inférieur" 1, disposé au fond du puits, à un panier dit "standard" 2 employé en quantité variable, en fonction de la hauteur du puits et disposé au milieu de celui-ci, et à un panier dit "supérieur" 3, disposé en haut du puits. Ces trois paniers présentent une structure commune.

De préférence, ces trois paniers 1, 2 et 3 sont réalisés en métal pour des raisons de coût. Ils pourraient également être réalisés dans un autre type de matériau présentant une bonne résistance mécanique et facile à usiner, comme les matières plastiques ou les matériaux composites.

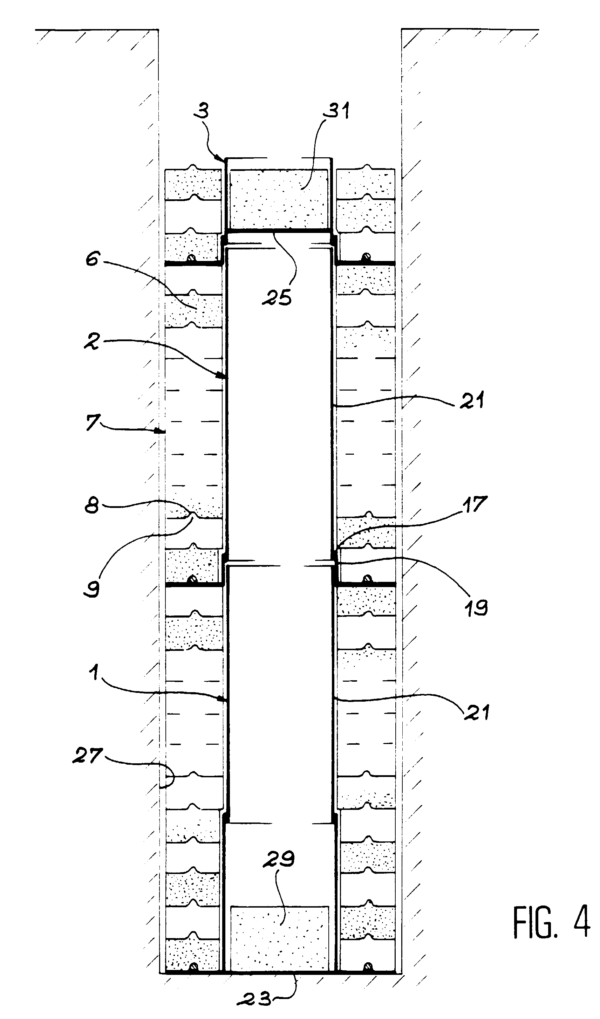

Comme illustré sur les figures 1, 2 et 3, ces paniers comprennent une virole 4 cylindrique dont l'une des extrémités est munie d'une embase annulaire 5 s'étendant radialement vers l'extérieur, sensiblement perpendiculairement à l'axe longitudinal X-X de ladite virole 4. Cette embase 5 est destinée à supporter les éléments unitaires 6 formant la barrière ouvragée 7 représentée en figure 4. De façon avantageuse, ces éléments 6 sont des blocs d'argile compactée en forme d'arc de cercle. Ils pourraient également être réalisés dans un autre matériau de densité élevée et pouvant gonfler en présence d'eau. Plusieurs de ces éléments 6 sont assemblés sur la totalité de l'embase 5 de façon à former une première couche annulaire d'éléments 6. Sur la figure 1, seul l'un de ces éléments 6 a été représenté à des fins de simplification. Chacun de ces éléments 6 comprend sur sa face inférieure, (c'est-à-dire la face dirigée vers l'embase 5), une gorge 8 et sur sa face opposée, une saillie 9. Cette gorge 8 et cette saillie 9 sont également en arc de cercle de façon à épouser la forme de l'élément 6. Lorsque plusieurs couches d'éléments 6 sont superposées, les saillies 9 d'une couche d'éléments 6 coopérent avec les gorges 8 de la couche d'éléments 6 placée au-dessus. Cette gorge 8 et cette saillie 9 permettent simultanément de centrer et d'assembler les différents éléments 6.

En outre, la virole 4 est avantageusement munie de perforations 11 sur au moins une partie de sa surface et de préférence sur la totalité de celle-ci. Ces perforations 11 permettent d'assurer le passage de l'eau de ruissellement) en direction des éléments d'argile 6, de façon à assurer le gonflement de ceux-ci une fois la barrière ouvragée mise en place dans le puits de stockage. Ce puits de stockage est illustré en figure 4.

En outre, l'embase 5 présente sur sa face 13, c'est-à-dire la face destinée à recevoir lesdits éléments 6, des moyens de positionnement 15 desdits éléments 6. De façon avantageuse, ces moyens de positionnement sont constitués par une nervure (ou cordon) annulaire dont le profil correspond à celui de la gorge 8 des éléments 6. Cette nervure est également métallique. Selon un autre mode de réalisation, ces moyens de positionnement 15 pourraient par exemple, être constitués par des ailes verticales s'étendant à la périphérie de l'embase 5 et bloquant l'élément 6 par sa surface latérale externe.

Enfin, les paniers 1, 2, 3 comprennent des moyens 17 permettant de les gerber les uns sur les autres. La virole 4 cylindrique présente deux zones de diamètre différent. La zone de plus grande diamètre 19 est située dans la partie inférieure de la virole 4 au voisinage de l'embase 5, tandis que la zone de plus petit diamètre 21 correspond à la partie supérieure de la virole. La jonction entre les zones 19 et 21 forme un épaulement. Cet épaulement 17 constitue justement le moyen de gerbage d'un panier sur le panier suivant. En effet, comme illustré en figure 4, les paniers 1, 2, 3 sont superposés de façon que la zone de plus petit diamètre 21 d'un panier pénètre dans la zone de plus grand diamètre 19 du panier contigu placé au-dessus et vienne en butée contre l'épaulement 17.

Le panier standard 2 illustré en figure 2, est utilisé au milieu du puits, comme cela est représenté en figure 4. Ce panier standard 2, présente une hauteur totale d'environ 140 cm, et sa zone de plus grand diamètre 19 présente une hauteur d'environ 10 cm.

Le panier inférieur 1 illustré en figure 1, présente une hauteur totale d'environ 160 cm et sa zone de plus grand diamètre 19 présente une hauteur d'environ 60 cm. Ces valeurs sont données à titre purement illustratif. En outre, la virole 4 est obturée dans sa zone de plus grand diamètre 19 par une plaque support 23 prévue dans le même plan que l'embase 5. Cette plaque support 23 pourrait également être prévue au-dessus du plan de l'embase 5, mais néanmoins dans la partie inférieure de la virole.

Le panier supérieur 3, illustré en figure 3, présente une hauteur totale d'environ 50 cm et sa zone de plus grand diamètre 19 présente une hauteur d'environ 10 cm. En outre, la virole 4 est munie dans la partie sensiblement médiane de sa zone de plus petit diamètre 21, d'une plaque support 25 obturant cette virole.

Comme illustré en figure 4, les différents types de paniers, chargés de leurs couches successives d'éléments 6 sont descendus à l'intérieur du puits 27 où ils sont superposés. Cette manipulation s'effectue à l'aide de pinces qui seront décrites ultérieurement.

Sur cette figure 4, seuls trois paniers 1, 2 et 3 ont été représentés. Toutefois, les paniers standard 2 peuvent être utilisés en plus grand nombre en fonction de la hauteur du puits 27. La structure spécifique du panier inférieur 1 et notamment la plaque support 23 ainsi que sa plus haute zone de grand diamètre 19, permettent de placer sur cette plaque 23 une couche d'argile 29. Cette couche 29 bouche le fond du puits 27 et compléte l'isolation des conteneurs (non représentés sur la figure 4) déjà assurée latéralement par les différentes couches d'éléments 6 formant la barrière ouvragée.

De façon similaire, une couche d'argile 31 est placée sur la plaque support 25 du panier supérieur 3.

D'une manière générale, le puits 27 creusé pour le stockage présente une section cylindrique, ce qui explique la forme cylindrique de la virole 4 et la forme en arc de cercle des éléments 6. Toutefois, si le puits présente une section carrée ou rectangulaire la virole 4 et les éléments 6 peuvent être adaptés en conséquence.

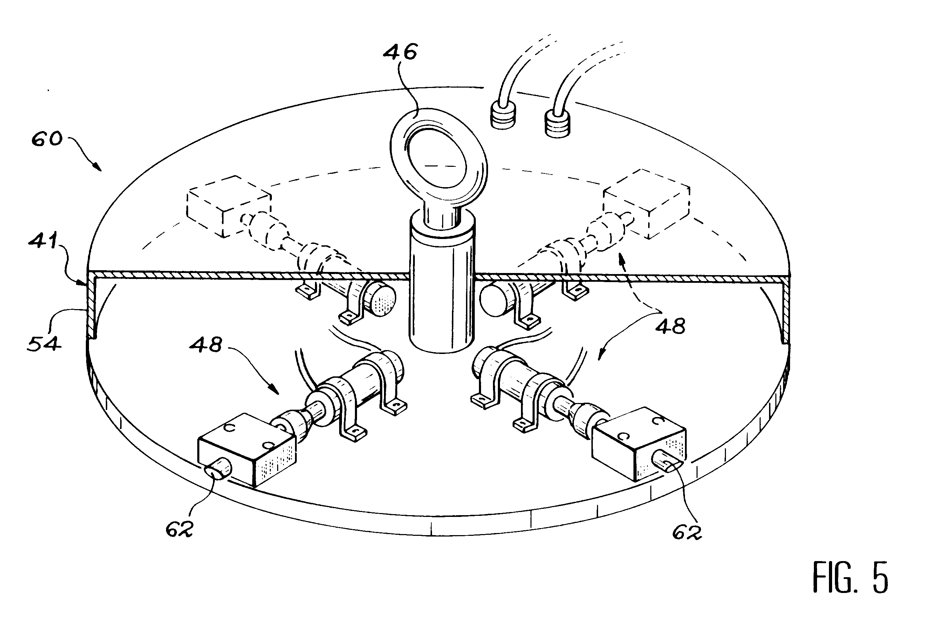

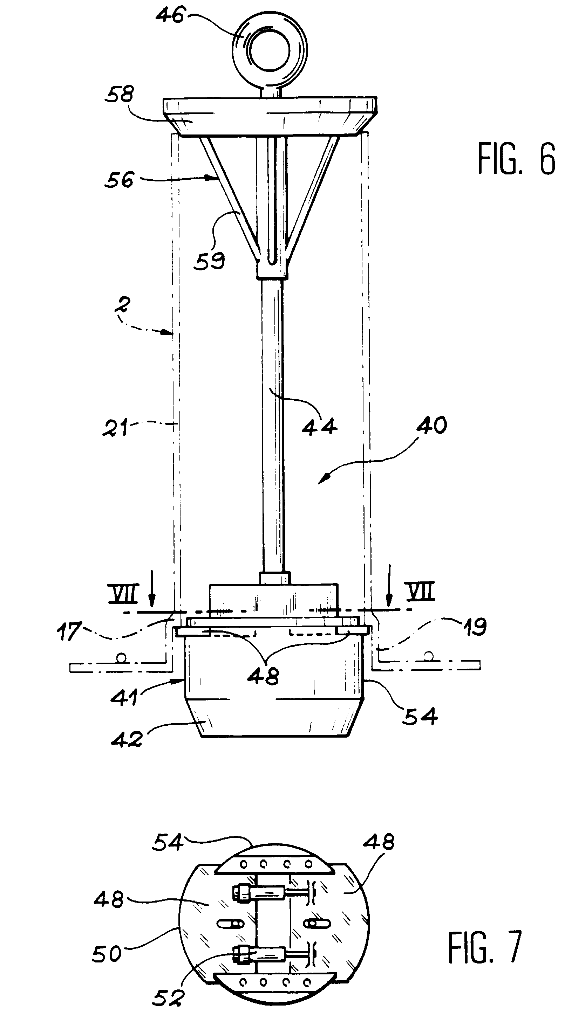

Deux modes de réalisation des pinces de manutention selon l'invention sont illustrés aux figures 5 et 6 respectivement.

La pince de manutention 40 illustrée en figure 6 est plus spécifiquement destinée à déplacer les paniers standard 2 et inférieur 1. Un panier standard 2 a été représenté en traits mixtes sur cette figure.

Cette pince de manutention comprend un corps cylindrique 41 formant organe de centrage et dont le diamètre est inférieur à celui de la virole 4 et notamment à sa zone de plus petit diamètre 21. De façon avantageuse, la base 42 de ce corps cylindrique est tronconique de façon à faciliter l'introduction de la pince à l'intérieur du panier que l'on souhaite déplacer. Ce corps cylindrique 41 est surmonté d'une tige 44 à l'extrémité de laquelle est prévu un moyen de levage 46, ici un anneau.

Deux organes rétractables 48 sont prévus à l'intérieur du corps cylindrique 41. Ces organes rétractables ou mâchoires ont la forme de plaques rectangulaires dont les bords extérieurs 50 (illustrés en figure 7) sont en arc de cercle. Ainsi, lorsque ces organes 48 sont rétractés, la périphérie circulaire du corps 41 est conservée. Le déplacement des organes 48 est assuré par des moyens moteurs 52. Ces moyens moteurs permettent de les déplacer afin qu'ils fassent saillie depuis la surface latérale 54 dudit corps 41. De façon avantageuse, ces moyens moteurs 52 sont constitués par deux vérins pneumatiques. Ils pourraient également être constitués par tout autre moyen permettant de déplacer latéralement les deux plaques 48. Les plaques 48 sont rétractées lors de l'introduction de la pince à i'intérieur du panier 1 ou 2 et elles sont écartées une fois la pince logée à l'intérieur du panier, (position représentée sur la figure 6). Les dimensions des plaques 48 sont telles, qu'une fois écartées, elles pénètrent dans la zone de plus grand diamètre 19 du panier, plus spécifiquement au niveau de l'épaulement 17. C'est la coopération de ces plaques 48 venant en appui sur l'épaulement 17 qui permet de soulever le panier.

De plus, alors que le corps cylindrique 41 forme un organe de centrage inférieur, c'est-à-dire destiné à venir dans la partie inférieure du panier, il est prévu sur la partie supérieure de la tige 44, un organe de centrage supérieur 56.

Cet organe de centrage 56 est formé d'un anneau 58 (ou d'un corps cylindrique) disposé coaxialement à la tige 44 et relié à celle-ci par quatre barres 59 disposées de façon inclinée par rapport à l'axe de la tige 44. Cet anneau ou corps 58 présente une base tronconique dont le diamètre est très légèrement inférieur à celui de la partie de plus petit diamètre 21 du panier, de façon à pouvoir y pénétrer.

La pince 60 illustrée en figure 5 est destinée plus spécifiquement à la manutention du panier supérieur 3 de plus petites dimensions. De façon similaire à ce qui a été décrit pour la pince 40, la pince 60 comprend un corps cylindrique 41 représenté partiellement arraché en figure 5. Ce corps 41 pourrait présenter éventuellement, une partie inférieure tronconique similaire à la partie 42 (mais non représentée sur cette figure). Cette pince 60 présente également un anneau de levage 46 fixé directement sur la face supérieure du corps cylindrique 41.

Les organes rétractables 48 sont ici constitués par quatre pions 62 répartis uniformément sur la périphérie du corps cylindrique 41 de façon à faire saillie de sa surface latérale 54. De même, les quatre pions 62 sont actionnés par des vérins pneumatiques 52. Ces quatre pions 62 sont conçus pour s'engager dans les perforations 11 prévues sur la virole 4 d'un panier. Toutefois, dans le cas où la virole 4 ne présenterait pas de perforations sur la totalité de sa surface, on pourrait prévoir quatre trous dans sa partie supérieure destinés justement à coopérer avec les pions 62.

On comprendra aisément que cette pince 60 pourrait également servir à manipuler les deux autres types de panier (1 et 2) et à cet effet pourrait également comprendre les moyens de centrage (56).

Les paniers 1, 2 et 3, chargés de plusieurs tonnes d'argile formant la barrière ouvragée, sont déplacés et disposés dans le puits 27 à l'aide des pinces spécifiques qui viennent d'être décrites. Après dépôt d'un premier panier, la pince utilisée est ramenée en surface afin de saisir le panier suivant. L'opération est répétée jusqu'à ce que le puits soit complétement rempli. Ensuite, la couche d'argile 29 est placée dans le panier inférieur 1, puis les conteneurs contenant les déchets radioactifs sont superposés au centre des viroles 4. Enfin, le panier supérieur 3 est mis en place avec la couche d'argile 31.

Dans la description qui vient d'être faite, les conteneurs contiennent des déchets radioactifs, toutefois il est bien sûr évident que ces paniers et pinces pourraient être utilisés lors du stockage de simples déchets (non radioactifs).

## Revendications

1. Panier (1, 2, 3) formant support des éléments (6) d'une barrière ouvragée (7), caractérisé en ce qu'il comprend une virole cylindrique (4) dont l'une des extrémités est munie d'une embase (5) annulaire s'étendant radialement vers l'extérieur sensiblement perpendiculairement à l'axe longitudinal (X-X) de ladite virole, cette embase (5) supportant lesdits éléments (6) et présentant des moyens de positionnement (15) de ces éléments (6), ce panier comprenant en outre des moyens (17) permettant de gerber les paniers les uns sur les autres.

2. Panier (1, 2, 3) selon la revendication 1, caractérisé en ce que la virole (4) est munie de perforations (11) sur au moins une partie de sa surface.

3. Panier (1, 2, 3) selon la revendication 1 ou 2, caractérisé en ce que les moyens de positionnement (15) sont constitués par une nervure annulaire prévue sur la face (13) de l'embase (5) destinée à recevoir les éléments (6) de barrière ouvragée, cette nervure coopérant avec une gorge (8) prévue à cet effet sur lesdits éléments (6).

4. Panier (1, 2, 3) selon l'une quelconque des revendications précédentes, caractérisé en ce que la virole (4) comprend une zone de plus grand diamètre (19) située au voisinage de l'embase (5) et une zone de plus petit diamètre (21), l'épaulement formé entre ces deux zones de diamètre différent formant les moyens de gerbage (17).

5. Panier (3) selon la revendication 4, caractérisé en ce que sa zone de plus petit diamètre (21) est obturée par une plaque support (25) disposée dans la partie sensiblement médiane de cette zone (21).

6. Panier (1) selon la revendication 4, caractérisé en ce que sa zone de plus grand diamètre (19) est obturée par une plaque support (23) disposée dans la partie inférieure de cette zone (19).

7. Panier (1, 2, 3) selon l'une quelconque des revendications précédentes, caractérisé en ce qu'il est réalisé en métal.

8. Panier (1, 2, 3) selon l'une quelconque des revendications précédentes, caractérisé en ce qu'il supporte des éléments (6) réalisés en argile compactée, présentant une forme en arc de cercle et coopérant avec l'embase (5) et la virole (4) de formes annulaires.

9. Pince de manutention (40, 60) d'un panier selon l'une quelconque des revendications 1 à 8, caractérisée en ce qu'elle comprend un corps cylindrique (41) formant organe de centrage, d'un diamètre inférieur à celui de la virole (4) dudit panier, un moyen de levage (46) fixé audit corps (41) et au moins deux organes rétractables (48) faisant saillie de la surface latérale (54) dudit corps, le mouvement de ces organes (48) étant assuré par des moyens moteurs (52).

10. Pince de manutention (40, 60) selon la revendication 9, caractérisée en ce que les moyens moteurs (52) sont des vérins pneumatiques.

11. Pince de manutention (60) selon la revendication 9 ou 10, permettant la manutention d'un panier selon l'une des revendications 2 à 8, caractérisée en ce que les organes rétractables (48) sont des pions (62) destinés à coopérer avec des perforations (11) prévues à cet effet sur la virole (4).

12. Pince de manutention (40) selon la revendication 9 ou 10, destinée à la manutention d'un panier selon l'une quelconque des revendications 4, 6, 7 ou 8, caractérisée en ce que les organes rétractables (48) sont des plaques destinées à coopérer avec l'épaulement (17) du panier.

13. Pince de manutention (40, 60) selon la revendication 11 ou 12, caractérisée en ce qu'une tige (44) relie le corps cylindrique (41) au moyen de levage (46) et en ce qu'un élément cylindrique (58) est fixé sur cette tige (44) au voisinage des moyens de levage (46), cet élément circulaire formant moyen de centrage (56).

## Patentansprüche

1. Halterungskorb (1, 2, 3) für Elemente (6) einer bearbeiteten Barriere (7),
**dadurch gekennzeichnet,** daß er einen zylindrischen Mantel (4) umfaßt, von dem ein Ende versehen ist mit einer ringförmigen Fußplatte (5), die sich radial nach außen erstreckt, im wesentlichen senkrecht zur Längsachse (X-X) von besagtem Mantel, wobei diese Fußplatte (5) die genannten Elemente (6) trägt und Positionierungseinrichtungen (15) dieser Elemente (6) aufweist, und dieser Korb außerdem Einrichtungen (17) umfaßt, die ermöglichen, die Körbe aufeinander zu stapeln.

2. Korb (1, 2, 3) nach Anspruch 1, dadurch gekennzeichnet, daß der Mantel (4) auf wenigstens einem Teil seiner Fläche mit Lochungen (11) versehen ist.

3. Korb (1, 2, 3) nach Anspruch 1 oder 2, dadurch gekennzeichnet, daß die Positionierungseinrichtungen (15) gebildet werden durch eine ringförmige Rippe, vorgesehen auf der Fläche (13) der Fußplatte (5) und dazu bestimmt, die Barriereelemente (6) der bearbeiteten Barriere aufzunehmen, wobei diese Rippe zusammenwirkt mit einer Hohlkehle (8), zu diesem Zweck an besagten Elementen (6) vorgesehen.

4. Korb (1, 2, 3) nach einem der vorangehenden Ansprüche, dadurch gekennzeichnet, daß der Mantel (4) eine Zone größeren Durchmessers (19) in der Nähe der Fußplatte (5) umfaßt und eine Zone kleineren Durchmessers (21), wobei die Schulter, ausgebildet zwischen diesen beiden Zonen unterschiedlichen Durchmessers, die Stapeleinrichtungen (17) bildet.

5. Korb (3) nach Anspruch 4, dadurch gekennzeichnet, daß seine Zone größeren Durchmessers (21) verschlossen ist durch eine Trägerplatte (25), angeordnet im wesentlichen im mittleren Teil dieser Zone (21).

6. Korb (1) nach Anspruch 4, dadurch gekennzeichnet, daß seine Zone größeren Durchmessers (19) verschlossen ist durch eine Trägerplatte (23), im wesentlichen angeordnet im unteren Teil dieser Zone (19).

7. Korb (1, 2, 3) nach einem der vorangehenden Ansprüche, dadurch gekennzeichnet, daß er aus Metall hergestellt ist.

8. Korb (1, 2, 3) nach einem der vorangehenden Ansprüche, dadurch gekennzeichnet, daß er Elemente (6) trägt, die aus verdichtetem Ton hergestellt sind, eine kreisbogenförmige Form aufweisen und zusammenwirken mit der Fußplatte (5) und dem Mantel (4), beide ringförmig.

9. Greifer (40, 60) eines Korbs nach einem der Ansprüche 1 bis 8, dadurch gekennzeichnet, daß er ein ein Zentrierungsorgan bildendes zylindrisches Gehäuse (41) mit einem kleineren Durchmesser als dem des Mantels (4) von besagtem Korb umfaßt sowie eine Hebeeinrichtung (46), befestigt an besagtem Gehäuse (41), und wenigstens zwei einziehbare Organe (48), die über die Seitenfläche (54) des Gehäuses vorstehen, wobei die Bewegung dieser Organe (48) durch motorische Einrichtungen (52) bewirkt wird.

10. Greifer (40, 60) nach Anspruch 9, dadurch gekennzeichnet, daß die motorischen Einrichtungen (52) Pneumatikzylinder sind.

11. Greifer (60) nach Anspruch 9 oder 10, der die Handhabung eines Korbs nach einem der Ansprüche 2 bis 8 ermöglicht, dadurch gekennzeichnet, daß die einziehbaren Organe (48) Bolzen (62) sind, die zusammenzuwirken können mit den zu diesem Zweck in dem Mantel (4) vorgesehenen Lochungen (11).

12. Greifer (40) nach Anspruch 9 oder 10, der die Handhabung eines Korbs nach einem der Ansprüche 4, 6, 7 oder 8 ermöglicht, dadurch gekennzeichnet, daß die einziehbaren Organe (48) Platten sind, die zusammenwirken können mit der Schulter (17) des Korbs.

13. Greifer (40, 60) nach Anspruch 11 oder 12, dadurch gekennzeichnet, daß eine Stange (44) das zylindrische Gehäuse (41) mit den Hebeeinrichtungen (46) verbindet, und dadurch, daß ein zylindrisches Element (58) in der Nähe der Hebeeinrichtungen (46) an dieser Stange (44) befestigt ist, wobei dieses kreisförmige Element eine Zentriereinrichtung (56) bildet.

## Claims

1. Basket (1, 2, 3) forming a support for the elements (6) of a worked barrier (7), characterized in that it comprises a cylindrical ferrule (4), one of whose ends is provided with an annular base (5) extending radially towards the outside substantially perpendicular to the longitudinal axis (X-X) of said ferrule, said base (5) supporting said elements (6) and having means (15) for positioning the elements (6), said basket also incorporating means (17) permitting the superimposed stacking of the baskets.

2. Basket (1, 2, 3) according to claim 1, characterized in that the ferrule (4) is provided with perforations (11) on at least part of its surface.

3. Basket (1, 2, 3 ) according to claim 1 or 2, characterized in that the positioning means (15) are constituted by an annular rib provided on the face (13) of the base (5) for receiving the worked barrier elements (6), said rib cooperating with a groove (8) provided for this purpose on said elements (6).

4. Basket (1, 2, 3) according to any one of the preceding claims, characterized in that the ferrule (4) comprises a larger diameter zone (19) in the vicinity of the base (5) and a smaller diameter zone (21), the shoulder formed between these two different diameter zones forming the stacking means (17).

5. Basket (3) according to claim 4, characterized in that its smaller diameter zone (21) is sealed by a support plate (25) located in the substantially median portion of said zone (21).

6. Basket (1) according to claim 4, characterized in that the larger diameter zone (19) is sealed by a support plate (23) located in the lower portion of said zone (19).

7. Basket (1, 2, 3) according to any one of the preceding claims, characterized in that it is made from metal.

8. Basket (1, 2, 3) according to any one of the preceding claims, characterized in that its support elements (6) made from compacted clay, having a circular arc shape and cooperating with the annular base (5) and ferrule (4).

9. Grab (40, 60) for handling a basket according to any one of the claims 1 to 8, characterized in that it comprises a cylindrical body (41) forming a centring member and having a diameter smaller than that of the basket ferrule (4), a means (46) for lifting said body (41) and at least two retractable members (48) projecting from the lateral surface (54) of the said body, the movement of these members (48) being ensured by motor means (52).

10. Handling grab (40, 60) according to claim 9, characterized in that the motor means (52) are pneumatic jacks.

11. Handling grab (60) according to claim 9 or 10, permitting the handling of a basket according to one of the claims 2 to 8, characterized in that the retractable members (48) are pins (62) for cooperating with perforations (11) provided for this purpose on the ferrule (4).

12. Handling grab (40) according to claim 9 or 10 for the handling of a basket according to any one of the claims 4, 6, 7 or 8, characterized in that the retractable members (48) are plates for cooperating with the shoulder (17) of the basket.

13. Handling grab (40, 60) according to claim 11 or 12, characterized in that a rod (44) connects the cylindrical body (41) to the lifting means (46) and in that a cylindrical element (58) is fixed to said rod (44) in the vicinity of the lifting means (46), said circular element forming a centring means (56).
